(19) Europäisches Patentamt / European Patent Office / Office européen des brevets

(11) **EP 2 481 707 A1**

(12) **EUROPEAN PATENT APPLICATION**
published in accordance with Art. 153(4) EPC

(43) Date of publication:
01.08.2012 Bulletin 2012/31

(51) Int Cl.:
*C01B 33/107* (2006.01)

(21) Application number: 10818574.5

(22) Date of filing: 27.09.2010

(86) International application number:
PCT/JP2010/005798

(87) International publication number:
WO 2011/036897 (31.03.2011 Gazette 2011/13)

(84) Designated Contracting States:
AL AT BE BG CH CY CZ DE DK EE ES FI FR GB
GR HR HU IE IS IT LI LT LU LV MC MK MT NL NO
PL PT RO SE SI SK SM TR

(30) Priority: 25.09.2009 JP 2009221413
25.09.2009 JP 2009221415

(71) Applicant: JX Nippon Oil & Energy Corporation
Chiyoda-ku
Tokyo 100-8162 (JP)

(72) Inventors:
• HAYASHI, Shinya
  Yokohama-shi
  Kanagawa 231-0815 (JP)
• ASANO, Tsuyoshi
  Yokohama-shi
  Kanagawa 231-0815 (JP)

(74) Representative: Algemeen Octrooi- en
Merkenbureau
P.O. Box 645
5600 AP Eindhoven (NL)

(54) **METHOD FOR MANUFACTURING SILICON TETRACHLORIDE AND METHOD FOR MANUFACTURING SILICON FOR USE IN A SOLAR CELL**

(57) In one aspect the present invention relates to a method for producing silicon tetrachloride comprising a step in which a silicon-containing substance that contains zeolite or preferably spent zeolite, is used for chlorination in the presence of a carbon containing substance. The invention also relates to a method for producing silicon for solar cell.

FIG.2

EP 2 481 707 A1

**Description**

BACKGROUND OF THE INVENTION

Field of the invention

The present invention relates to a method for producing silicon tetrachloride where various inorganic silicon compounds are used as a raw material and a method for producing silicon for solar cell.

Related Art

Silicon tetrachloride is used as a synthetic raw material in various organic silicon compounds such as fine silica, synthetic quartz, silicon nitride, etc., to which much attention has been paid recently as a raw material of silicon for solar cell.

In recent years, a reduction in emission of carbon dioxide, which is considered as a causative substance of global warming, has been a significant issue for prevention of global warming. Solar cell has attracted a considerable attention as a solution for preventing global warming, and the demand for solar cell production has been remarkably increased. A main current solar cell uses silicon in a power generation layer, and thus the supply of silicon for solar cell production falls into a tight situation with its increasing demand for silicon.

On another front, since a price of current solar cell is still expensive, a price of electricity produced by solar cell is several times as high as electricity provided by commercial electric companies, and thus reductions in raw material costs and production costs have been desired.

Method for producing silicon for solar cell includes the following three techniques. (1) Siemens method: producing polycrystalline silicon by reducing trichlorosilane with hydrogen, (2) Fluid bed method: producing polycrystalline silicon by allowing silicon particulates to flow in a reactor, and introducing thereto a mixed gas composed of monosilane and hydrogen, (3) Zinc reduction method: producing polycrystalline silicon by reducing silicon tetrachloride with molten zinc. Methods for producing silicon for solar cell, which are oriented for reducing the product price, include (1) Siemens method, (2) Fluid bed method has a fundamental problem of low production efficiency with regard to high purity metal silicon, but even so, has a superiority in production efficiency (3) Zinc reduction method is considered to be preferably used.

Methods for producing silicon tetrachloride to be used as a raw material in a zinc reduction method include the following three techniques.

(1) Metal silicon or silicon alloy is reacted with hydrogen chloride. In this technique, metal silicon is used as a raw material. Metal silicon is produced by reducing silica stone in a electric furnace under a temperature condition of 2,000°C or higher, and thus disadvantageously a large amount of electricity is required, which leads to an increase in the raw material price. Also in this technique, silicon tetrachloride is obtained as a byproduct in trichlorosilane production process, and thus the reaction yield is reduced.

(2) Silicon carbide is reacted with chlorine. This technique has a defect in that a large amount of electricity is required for producing silicon carbide, which leads to an increase in the raw material price.

(3) A mixture of a silica-containing substance such as silica stone and carbon is reacted with chlorine.

$$SiO_2+2C+2Cl_2 \rightarrow SiCl_4+2CO \qquad (a)$$

In this technique, as shown in the above formula (a), a silicon-containing substance such as silica stone is reacted with carbon and chlorine to produce silicon tetrachloride. A mixture of a silica-containing substance such as silica stone and carbon has a lower reactivity with chlorine, and furthermore the reaction has to be made under a high temperature condition of 1,300°C or higher, but the raw material price in this technique is lower as compared with those in the above techniques (1) and (2), and thus price reduction in silicon for solar cell can be expected by improving the reaction in the above method (3).

On the other hand, in the reaction in method (3), one example is reported that when a carbonized product of silicic acid biomass is used as a silicon-containing substance, the reactivity with chlorine is increased drastically, and thereby silicon tetrachloride is produced in a high yield even under a lower temperature condition of 400°C-1,100°C than the conventional reaction temperature (see Patent Document 1). This is because, silica and carbon contained in the carbonized product are each composed of micro particles which exist in a high dispersion state, and these particles are porous and thus have a larger surface area.

However, a silicic acid biomass has a smaller specific gravity, and therefore, the cost for collecting and transporting a large amount of silicic acid biomasses is significantly increased in industrialization. Furthermore, a large amount of silicic acid biomass can hardly be provided stably, and therefore, it is difficult to define that a silicic acid biomass is a satisfactory useful substance in consideration of mass production.

In the reaction in method (3), another example is reported that a conversion rate of chlorination reaction was increased by adding a potassium compound to the reactant and also that the conversion rate of chlorination reaction was increased by adding sulfur or a sulfur compound to the reactant, which suggesting that the potassium content or the sulfur content acts as a catalyst in the chlorination reaction (see Patent Document 2 or 3).

However, in the conventional techniques, a reaction catalyst such as a potassium compound or a sulfur compound is dispersed in a raw material by mixing the compound with a silicon-containing substance and a carbon-containing substance, or otherwise, by feeding it into the reaction system directly. With these approaches, the reaction catalyst can hardly be highly dispersed in the raw material, and so it is difficult to define that such a catalyst exhibit a catalytic ability sufficiently.

On the other hand, zeolite is a porous material and thus has a larger surface area. Additionally, zeolite has an acid point, and thus, it is expected that when zeolite is mixed with a carbon-containing substance, silica and carbon can be brought into a highly dispersed state by an interaction between the carbon-containing substance and the acid point of the zeolite, as same in the case of a silica and carbon compound derived from a biomass. Further, a decreased reaction temperature is expected.

Zeolite is used for various applications such as reaction catalyst, adsorbent or ion exchange membrane in many industrial fields, and thus its cost-effective and stable supply can be expected. Moreover, most of the spent zeolite used in industrial fields is processed as an industrial waste without being collected and recycled.

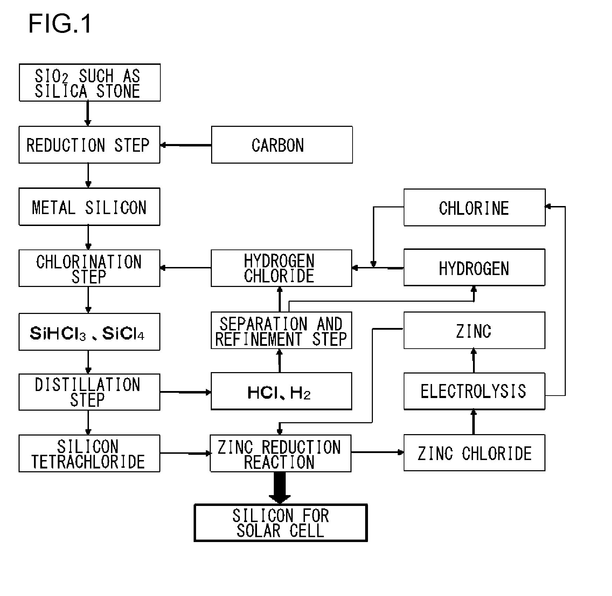

Figure 1 shows an ordinary process for producing silicon for solar cell by using a currently suggested zinc reduction method (see Patent Document 4).

At first, as shown in the following formula (d) or (e), metal silicon with a purity of around 97%-99% is produced by reducing silicon dioxide such as silica stone with carbon.

$$SiO_2 + C \rightarrow Si + CO_2 \qquad (d)$$

$$SiO_2 + 2C \rightarrow Si + 2CO \qquad (e)$$

However, this production process has a fundamental problem that silicon dioxide has to be reduced under a reaction temperature of 2,000°C or higher, and thus requiring a large amount of electricity, which leads to an increase in the price of metal silicon.

Metal silicon with a purity of around 97%-99% obtained in the above reaction is reacted with silicon to produce silicon tetrachloride as shown in the following formula (f).

$$Si + 4HCl \rightarrow SiCl_4 + 2H_2 \qquad (f)$$

As described above, a production process of silicon tetrachloride used in a zinc reduction method has a problem such that silicon dioxide has to be produced through two reaction steps, thus requiring a large amount of electricity, and therefore a further improvement is required.

High purity polycrystalline silicon, is produced by refining silicon tetrachloride produced according to the above technique, followed by reducing the refined silicon tetrachloride with a zinc gas based on the following reaction formula (g).

$$SiCl_4 + 2Zn \rightarrow Si + 2ZnCl_2 \qquad (g)$$

Zinc chloride, as a byproduct of the reaction, is separated into metallic zinc and chlorine by electrolysis, and thereafter, metallic zinc is recycled as a raw material in the above reaction (g). Additionally, chlorine is reacted with hydrogen produced in the above process of producing the silicon tetrachloride (reaction formula (f)) to produce hydrogen chloride, and the resulting hydrogen chloride is then recycled as a raw material to produce the silicon tetrachloride.

Patent Document

Patent Document 1: Japanese Patent Application Publication No.S58-055330
Patent Document 2: Japanese Examined Patent Application Publication No.H03-055407
Patent Document 3: Japanese Examined Patent Application Publication No.H04-072765
Patent Document 4: Japanese Patent Application Publication No.H11-092130

SUMMARY OF THE INVENTION

Problems to be Solved by the Invention

Based on the current situation described above, it is desired that silicon for solar cell is provided more stably and cost-effectively, particularly, silicon tetrachloride, which is a raw material for producing silicon for solar cell, is desired to be provided more stably and cost-effectively.

The present invention has been accomplished in view of the problems described above, an object of the invention is to provide a technology for producing silicon tetrachloride, which is a raw material for producing silicon for solar cell, stably and cost-effectively.

Also, the invention provides a new production technique capable of continuously supplying silicon for solar cell stably and cost-effectively, by further simplifying the production process and decreasing the reaction temperature than those in the conventional method by using a raw material which can be provided continuously in a stable and cost-effective manner.

Means for Solving Problems

One aspect of the invention is a production method of silicon tetrachloride. This method for producing the silicon tetrachloride comprises chlorinating a silicon-containing substance that contains zeolite in the presence of a carbon-containing substance.

According to the aspect of the method for producing silicon tetrachloride, silicon tetrachloride can be produced in a good yield even under a lower temperature condition due to a property of zeolite, and thereby reducing the production costs. Particularly, a raw material cost for producing silicon tetrachloride can be reduced by using an industrially used spent zeolite, to thereby providing silicon for solar cell stably and cost-effectively.

An ordinary technique for producing silicon tetrachloride includes, for example, a technique using a two-step reaction, where metal silicon is produced from a silicon-containing substance, and then the obtained metal silicon is reacted with hydrogen chloride to produce silicon tetrachloride, and also, as described above, a technique where silicon tetrachloride is produced directly from a silica-containing substance such as silica stone.

$$SiO_2 + 2C + 2Cl_2 \rightarrow SiCl_4 + 2CO \qquad (a)$$

Another aspect of the invention is a method for producing silicon for solar cell. This method for producing silicon for solar cell comprises: (1) chlorinating a silicon-containing substance that contains zeolite in the presence of a carbon-containing substance to produce silicon tetrachloride; (2) separating and refining the silicon tetrachloride produced in the above Step (1); and (3) reacting the silicon tetrachloride refined in the above Step (2) with a zinc gas to produce polycrystalline silicon.

According to an aspect of the method for producing silicon for solar cell, silicon tetrachloride is produced directly through a reaction shown in above (a) by using a silicon-containing substance that contains zeolite, and thereby decreasing the number of the reaction steps and lowering the reaction temperature than in the conventional production method so that silicon for solar cell can be provided continuously in a stable and cost-effective manner.

Effect of the invention

According to the invention, silicon tetrachloride, which is a raw material for producing silicon for solar cell, can be produced stably and cost-effectively. Also, according to the invention, silicon for solar cell can be provided stably and cost-effectively.

BRIEF DESCRIPTION OF THE DRAWINGS

FIG. 1 is a process diagram showing an ordinary method for producing silicon for solar cell using a conventional zinc reduction method.

FIG. 2 is a process diagram showing a method for producing silicon for solar cell according to an embodiment of the invention.

DETAILED DESCRIPTION OF THE INVENTION

Best Mode for Carrying Out the Invention

A preferred embodiment of the present invention will be described below, but the present invention is not limited thereto.

In the method for producing silicon tetrachloride according to an embodiment of the invention, silicon tetrachloride is produced through a process of chlorinating a silicon-containing substance that contains zeolite by using a chlorine-containing substance in the presence of a carbon-containing substance.

(Silicon-containing substance)

A silicon-containing substance used in the present embodiment may contain at least zeolite, or otherwise contain a silicon-containing compound in addition to zeolite.

"Zeolite" in this embodiment is a crystalline inorganic porous material containing silica. Specific examples thereof include zeolite A, zeolite X, zeolite Y, zeolite L, zeolite $\Omega$, USY zeolite, ZK, ZSM, silicalite, chabazite, erionite, offretite, mordenite, nitrolite, faujasite, sodalite, thomsonite, but not limited to these.

Characteristics of zeolite include, because it is porous material, a larger surface area and an acid point. When a substance having a smaller surface area such as silica stone is used as a silicon-containing substance, a pulverization process for increasing the surface area is required, while zeolite has a larger surface area and thus requiring no pulverization process, and thereby the production process can be reduced on its industrialization. Additionally, when zeolite is mixed with a carbon-containing substance, silica and carbon can be brought into a highly dispersed state by an interaction between the carbon-containing substance and the acid point of the zeolite, and thus, silicon tetrachloride can be obtained in a high yield even in a lower temperature condition.

Zeolite desirably has the following characteristics, but not limited to these. Zeolite suitably has a surface area (BET) of 1-1000 $m^2/g$, preferably 10-700 $m^2/g$, more preferably 300-600 $m^2/g$, but not limited to these. Zeolite suitably has a mean pore diameter of 2-100A, preferably 10-70A, more preferably 30-50A, but not limited to these. Zeolite suitably has a pore volume of 0.1-2.0 mL/g, preferably 0.3-1.5 mL/g, more preferably 0.5-1.0 mL/g, but not limited to these. Zeolite suitably has an acid point of 0.01-1.0 mol/kg, preferably 0.1-0.8 mol/kg, more preferably 0.3-0.6 mol/kg, but not limited to these. Zeolite suitably has a silica-alumina molar ratio of 2 or higher, preferably 2-1000, more preferably 10-1000, but not limited to these.

Zeolite composing a silicon-containing substance preferably includes potassium. When silicon tetrachloride is produced as described above, if a chlorination reaction is carried out in the presence of potassium, potassium acts as a catalyst of the reaction, and thereby increasing the conversion rate of the reaction. However, in a conventional technique, a separately prepared potassium compound is simply mixed with a silicon-containing substance and a carbon-containing substance, and thus, it is difficult to disperse the potassium compound highly in these substances, so this can hardly be defined that potassium exhibits a sufficient catalytic ability. Whereas, potassium can be incorporated into zeolite at a molecular level, and thus, potassium can be brought into a high dispersion state with silica and carbon, thereby increasing the conversion rate of the reaction even with a low content of potassium.

Potassium may be incorporated in a composition of zeolite from the beginning, and also be contained in zeolite by conducting an ion-exchange treatment using a solution such as potassium hydroxide. The content of potassium may suitably be 0.01%-30% by mass, preferably 0.1%-15% by mass, more preferably, 0.1%-5% by mass, but not limited to these.

Additionally, spent zeolite is preferably used in the reaction. "Spent zeolite" refers to an industrially wasted zeolite. Specific examples of spent zeolite include a zeolite wasted after used as a reaction catalyst, an adsorbent, or an ion exchange membrane, but not limited to these. Spent zeolite may contain a substance other than zeolite.

Zeolite is used for various applications such as reaction catalyst, adsorbent or ion exchange membrane in many industrial fields, and thus spent zeolite can be provided stably in a large amount. Moreover, most of the spent zeolite is treated as an industrial waste without being collected and recycled. When a silicon-containing substance, which contains at least spent zeolite, is used as a raw material, not only raw material costs but also processing costs of spent zeolite, which were conventionally required, can be reduced. Besides, industrial wastes can also be reduced, and therefore the load to the environment can be reduced.

Furthermore, a spent catalyst is preferably used as spent zeolite, and particularly a spent catalyst, which was used for a crude oil processing, can be suitably used, but not limited this. Some of spent catalysts used for a crude oil processing include a catalyst to which a carbon-containing substance of the crude oil is attached, whereby silica and a carbon-containing substance described later can be brought into a higher dispersion state. Thereby, a higher conversion rate of chlorination reaction can be achieved even under a lower temperature condition. An amount of the carbon-containing substance to be added can also be reduced, which results in a further cost reduction.

Additionally, some of spent catalysts used for a crude oil processing include a catalyst to which a sulfur component of the crude oil is attached, whereby a conversion rate of the chlorination reaction is further increased by a catalytic action of the sulfur component.

Specific examples of silicon-containing compound include silica stone, quartz sand, silicon-accumulated biomass and amorphous silica alumina, but not limited to these. The suitable amount of silicon contained in a silicon-containing compound is 15%-46% by mass, preferably 20%-45% by mass, more preferably, 20%-35% by mass, but not limited to these.

Furthermore, a silicon-containing substance used in the present embodiment may include an accessory component in addition to a primary component which comprises the above-described zeolite or a silicon-containing compound. Specific examples of the accessory component include a noble metal such as gold, silver, platinum, palladium or molybdenum which is supported on zeolite, and a binder such as clay mineral, silica sol or alumina sol which is used to form zeolite, but not limited to these.

(Carbon-containing substance)

Carbon-containing substances used in the present embodiment, may be not only a solid such as coke, charcoal or carbon black, but also a gas such as carbon monoxide, carbon dioxide or methane, and further, carbon monoxide, which is generated in producing silicon tetrachloride, may be recycled, but not limited to these. An amount of the carbon-containing substance to be added is suitably selected such that the molar number of carbon would be 2-25 times, preferably 2-12 times, more preferably, 3-6 times lager than the total molar number of silicon and aluminum included in a silicon-containing substance, but not limited to these.

A silicon-containing substance and a carbon-containing substance may simply be mixed together or otherwise mixed through carbonization. Carbonization refers to a process where a silicon-containing substance and a carbon-containing substance are mixed, and the obtained mixture is then heated in an inert gas atmosphere to carbonize the silicon-containing substance. Through carbonization of zeolite, silica and carbon can be brought into a higher dispersion state than in the case where zeolite and carbon-containing substance are simply mixed together. An inert gas for use in carbonization is nitrogen, argon or helium, but not limited to these. A heating temperature at carbonization is suitably 200°C-1200°C, preferably 400°C-1000°C, more preferably 600°C-800°C, but not limited to these.

In one embodiment of the invention, a carbon-containing substance contains an ash produced in an industrial process. An ash produced in an industrial process refers to an ash containing carbon produced by combustion or incineration in plant. A specific example of the ash is an ash produced in a waste combustion plant or in a power plant, but not limited to this. An ash produced in an industrial process generally has a smaller particle diameter and a larger surface area, and thus silica and carbon can be in a higher dispersion state.

The amount of carbon contained in an ash produced in an industrial process is suitably 30%-95% by mass, preferably 60%-95% by mass, more preferably 70%-90% by mass based on the total mass of the ash, but not limited to these. A mean particle diameter of carbon contained in an ash produced in an industrial process is suitably 0.1-1000 $\mu$m, preferably 1-100 $\mu$m, more preferably 5-30 $\mu$m, but not limited to these. A surface area of an ash produced in an industrial process (BET) is suitably 0.01-100 $m^2/g$, preferably 0.1-50 $m^2/g$, more preferably 1-30 $m^2/g$, but not limited to these.

When a substance having a larger particle diameter such as coke or charcoal is used as a carbon-containing substance, a pulverization process is required to reduce the particle diameter, while an ash produced in an industrial process dose not require a pulverization process, and therefore the production process can be reduced. An ash produced in an industrial process can be provided stably in a large amount. Furthermore, most of the ash produced in an industrial process is treated as an industrial waste without being collected and recycled. Therefore, when an ash produced in an industrial process is used as a carbon-containing substance, not only raw material costs but also processing costs of spent zeolite, which were conventionally required, can be reduced. Besides, industrial wastes can also be reduced, and therefore the load to the environment can be reduced.

In one embodiment of the invention, an ash produced in an industrial process, especially, an ash produced in a power-generation facility where a combustion energy is converted into an electric power by burning an organic substance (hereinafter, referred to as an ash produced in a power-generation facility) is preferably contained as an above-describe carbon-containing substance. An ash produced in a power-generation facility refers to an ash produced primarily in a thermal power plant or in an integrated gasification combined cycle (hereinafter, abbreviated as IGCC), but not limited to this. IGCC is an electric power production system where electricity is generated in a hybrid power generation facility, by using, as a raw material, a synthetic gas including carbon monoxide or hydrogen as a primary component, which is produced from a fossil fuel such as heavy oil, petroleum residue oil, petroleum coke, olimulsion, or coal, and from where a large amount of ashes are discarded.

Characteristics of an ash produced in a power-generation facility include, of course, a smaller particle diameter and a larger surface area, and besides, a sulfur content arising from a use of fossil fuel as a raw material. As described above, sulfur acts as a catalyst in a chlorination reaction, and thus, when an ash produced in a power-generation facility is used as a carbon-containing substance, a conversion rate of the chlorination reaction is increased. An ash produced in a power-generation facility suitably contains 1%-30% by mass, preferably 2%-20% by mass, and more preferably, 5%-10% by mass of sulfur, but not limited to these.

In a conventional technique, a raw material and a sulfur compound was mixed by mixing a sulfur compound with a silicon-containing substance and a carbon-containing substance directly or otherwise by feeding a sulfur content directly into a reaction system, and thus, it is difficult to highly disperse silica and carbon with a sulfur compound, so this can hardly be defined that sulfur exhibits a sufficient catalytic ability. On the other hand, an ash produced in a power-generation facility includes carbon and sulfur in a high dispersion state at a molecular level, and therefore, the conversion rate of the reaction can be increased even with a low content of sulfur.

A catalyst promoting a chlorination reaction may be added on producing silicon tetrachloride. A catalyst promoting a chlorination reaction includes a potassium content or a sulfur content, but not limited to this. Specifically, as a potassium content, potassium carbonate, potassium chloride, potassium hydroxide, potassium sulfate or potassium nitrate can be used, and, as a sulfur content, sulfur, sulfur dioxide, hydrogen sulfide or carbon disulfide can be used, but not limited to these. An amount of the catalyst to be added may suitably be 0.05%-30% by mass, preferably 0.05%-20% by mass, more preferably 0.1%-10% by mass based on the silicon content in the reaction mixture, but not limited to these. A method for mixing a silicon-containing substance that contains at least zeolite with a carbon-containing substance, and, as required, with a solid or liquid catalyst may be performed either by wet process or dry process, and various other techniques can also be used. Additionally, these substances may be provided directly in a reactor without mixing with a catalyst.

(Carbon-containing substance)

As a chlorine-containing substances used in the present embodiment, chlorine or a chlorinated carbon compound such as carbon tetrachloride, tetrachloroethylene or phosgene, and a mixture of chlorine with carbon monoxide, carbon dioxide, methane, chlorohydrocarbon or an inert gas can be used, but not limited to these.

In a production method of the present embodiment, a reaction of a chlorine-containing substance with a silicon-containing substance, a carbon-containing substance, or a mixture to which a catalyst is added as required may be conducted by using either an immobilized bed or a fluidized bed, and the reaction temperature is suitably 400°C-1500°C, preferably 600°C-1200°C, more preferably 700°C-900°C, but not limited to these.

A method for producing silicon tetrachloride of the invention will be specifically described below with reference to the examples.

(Example 1-1)

100 mg of USY zeolite (manufactured by Catalysts and Chemicals Industries Co., Ltd., silica-alumina molar ratio: 150) was used as a silicon-containing substance, and 39 mg of coke (manufactured by Nippon Oil Corp., carbon content: 99.9% by mass or higher) was used as a carbon-containing substance. The USY zeolite used has a surface area (BET) of 570 $m^2$/g, a mean pore diameter of 48A, a pore volume of 1.1 mL/g, and an acid point of 0.5 mol/kg, and a commercially available coke was used after pulverized by a ball mill. The carbon-containing substance was added into the silicon-containing substance and then mixed to obtain a reaction mixture. An amount of the carbon-containing substance to be added was set such that a molar number of C included in the reaction mixture would satisfy the following formula (b).

Molar number of C included in a reaction mixture = 2A+3B   (b)

A: Molar number of Si included in a silicon-containing substance
B: Molar number of Al included in a silicon-containing substance

A reaction mixture was brought into contact with a pure chlorine gas for 1 hour at a temperature of 600°C-1000°C so as to conduct a chlorination reaction to obtain a reaction product. Conversion rate of the chlorination reaction to silicon tetrachloride was calculated by the following formula (c), and shown in the following Tables 1 and 5.

Conversion rate of reaction (%)= X/Y x 100   (c)

X: Molar number of a produced silicon tetrachloride

Y: Molar number of Si included in a silicon-containing substance

In the followings, a same USY zeolite as used in Example 1-1 was used in Examples 1-2 to 1-7 and, in Examples 1-2 to 1-4 and 1-7 and a Comparative example 1-1, a coke treated with a same pulverization process as used in Example 1-1 was used. In all Examples and Comparative examples, a same molar number of C in reaction mixture and a same production technique of the reaction mixture as those used in Example 1-1 were used.

[Table 1]

| Example 1-1: Silicon-containing substance - USY zeolite (without potassium processing), Carbon-containing substance - Coke | | | | | |
|---|---|---|---|---|---|
| Reaction temperature (°C) | 600 | 700 | 800 | 900 | 1000 |
| Conversion rate of reaction (%) | 30.2 | 49.5 | 56.2 | 71.9 | 71.0 |

(Example 1-2)

100 mg of USY zeolite incorporated with potassium was used as a silicon-containing substance, and 39 mg of coke was used as a carbon-containing substance. USY zeolite was incorporated with potassium by ion exchange using 10% of aqueous potassium hydroxide solutions (manufactured by Aldrich), where the content of the incorporated potassium was 3.2% by mass with respect to the content of silica in USY zeolite. The reaction mixture was brought into contact with a pure chlorine gas at 900°C for 1 hour so as to conduct a chlorination reaction, and thereby 250 mg of reaction product was obtained. Conversion rate of the reaction is shown below in Table 5.

(Example 1-3)

100 mg of spent USY zeolite was used as a silicon-containing substance and 37 mg of coke was used as a carbon-containing substance. A spent USY zeolite used in the example was same as that used as an ion exchange resin film. The reaction mixture was brought into contact with a pure chlorine gas at 900°C for 1 hour so as to conduct a chlorination reaction, and thereby 228 mg of reaction product was obtained. Conversion rate of the reaction is shown below in Table 5.

(Example 1-4)

100 mg of spent catalyst was used as a silicon-containing substance and 36 mg of coke was used as a carbon-containing substance. A spent catalyst used in the example was a USY zeolite used for a crude oil processing, and 1.9% by mass of carbon content and 0.3% by mass of sulfur content of the crude oil relative to the total mass of the spent catalyst were attached thereto. A reaction mixture was brought into contact with a pure chlorine gas for 1 hour at a temperature of 600°C-1000°C so as to conduct a chlorination reaction and to obtain a reaction product. Conversion rate of the chlorination reaction to silicon tetrachloride was shown in the following Tables 2 and 5.

[Table 2]

| Example 1-4: Silicon-containing substance - spent catalyst (without potassium processing), Carbon-containing substance - Coke | | | | | |
|---|---|---|---|---|---|
| Reaction temperature (°C) | 600 | 700 | 800 | 900 | 1000 |
| Conversion rate of reaction (%) | 38.9 | 58.2 | 81.1 | 80.5 | 80.2 |

(Example 1-5)

100 mg of USY zeolite was used as a silicon-containing substance, and 46 mg of ash produced in an industrial process was used as a carbon-containing substance. In the example, in place of an ash produced in an industrial process, an ash produced in a waste combustion plant was used without pulverization. An ash produced in an industrial process used had a carbon content of 85.2% by mass, a mean particle diameter of 17 $\mu$m, and a surface area (BET) of 19 m$^2$/g. A reaction mixture was brought into contact with a pure chlorine gas for 1 hour at a temperature of 600°C-1000°C so as to conduct a chlorination reaction to obtain a reaction product. Conversion rate of the chlorination reaction to silicon tetrachloride was shown in the following tables 3 and 5.

[Table 3]

| Example 1-5: Silicon-containing substance - USY zeolite (without potassium processing), Carbon-containing substance - Ash produced in an industrial process | | | | | |
|---|---|---|---|---|---|
| Reaction temperature (°C) | 600 | 700 | 800 | 900 | 1000 |
| Conversion rate of reaction (%) | 43.2 | 60.7 | 72.5 | 72.8 | 73.3 |

(Example 1-6)

100 mg of USY zeolite was used as a silicon-containing substance, and 49 mg of ash produced in a power-generation facility was used as a carbon-containing substance. In the example, in place of an ash produced in a power-generation facility, an ash produced in an IGCC was used without pulverization. An ash produced in an IGCC used had a carbon content of 79.0% by mass, a sulfur content of 5.9% by mass, a mean particle diameter of 8 $\mu$m, and a surface area (BET) of 23 m$^2$/g. The reaction mixture was brought into contact with a pure chlorine gas at 900°C for 1 hour so as to conduct a chlorination reaction, and thereby 258 mg of reaction product was obtained. Conversion rate of the reaction is shown below in Table 5.

(Example 1-7)

100 mg of USY zeolite was used as a silicon-containing substance, and 39 mg of coke was used as a carbon-containing substance. In the example, Potassium hydroxide (manufactured by Aldrich) was mixed to the reaction mixture such that the potassium content would be 3.2% by mass relative to the content of silica. The reaction mixture mixed with potassium was brought into contact with a pure chlorine gas at 900°C for 1 hour so as to conduct a chlorination reaction, and thereby 240 mg of reaction product was obtained. Conversion rate of the reaction is shown below in Table 5.

(Comparative example 1-1)

100 mg of silica stone was used as a silicon-containing substance and 39 mg of coke was used as a carbon-containing substance. A silica stone was used after pulverized by a ball mill. A silica stone after pulverization had a surface diameter (BET) of 2,160 cm$^2$/g and a silica content of 95.2% by mass. A reaction mixture was brought into contact with a pure chlorine gas for 1 hour at a temperature of 600°C-1000°C so as to conduct a chlorination reaction, and thereby 141 mg of reaction product was obtained. Conversion rate of the chlorination reaction to silicon tetrachloride was shown in the following tables 4 and 5.

[Table 4]

| Comparative example 1-1: Silicon-containing substance - Silica stone, Carbon-containing substance - Coke | | | | | |
|---|---|---|---|---|---|
| Reaction temperature (°C) | 600 | 700 | 800 | 900 | 1000 |
| Conversion rate of reaction (%) | 3.9 | 3.9 | 4.2 | 4.0 | 6.4 |

Following table 5 shows a conversion rate of reaction at the reaction temperature of 900°C in each example and comparative example.
[Table 5]

| Experiment | Sample | Potassium processing | Carbon-containing substance | Conversion rate of reaction (%) |
|---|---|---|---|---|
| Example 1-1 | USY zeolite | Absent | Coke | 71.9 |
| Example 1-2 | USY zeolite | Present | Coke | 82.1 |
| Example 1-3 | Spent USY zeolite | Absent | Coke | 72.3 |
| Example 1-4 | Spent catalyst | Absent | Coke | 80.5 |
| Example 1-5 | USY zeolite | Absent | Ash produced in an industrial process | 72.8 |
| Example 1-6 | USY zeolite | Absent | Ash produced in a power-generation facility | 81.7 |
| Example 1-7 | USY zeolite | Potassium mixture | Coke | 75.2 |
| Comparative example 1-1 | Silica stone | Absent | Coke | 4.0 |

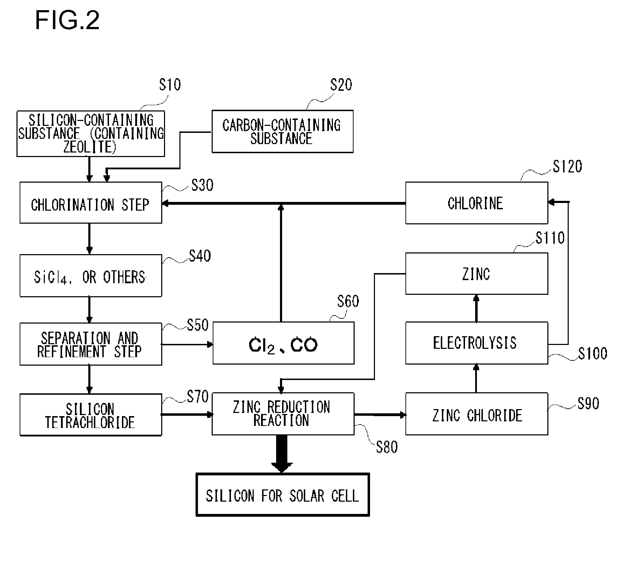

A method for producing silicon for solar cell according to an embodiment of the invention comprises: (1) chlorinating a silicon-containing substance that contains zeolite in the presence of a carbon-containing substance to produce silicon tetrachloride; (2) separating and refining the silicon tetrachloride produced in the above Step (1); and (3) reacting the silicon tetrachloride refined in the above Step (2) with a zinc gas to produce polycrystalline silicon. FIG. 2 is a process diagram showing a method for producing silicon for solar cell according to an embodiment of the invention.

[Step (1)]

In Step (1), a silicon-containing substance, which contains at least zeolite (S10) is chlorinated (S30) in the presence of a carbon-containing substance (S20) to produce silicon tetrachloride (S40).
"Zeolite" in this step is a crystalline inorganic porous material containing silica, and specific examples thereof include zeolite A, zeolite X, zeolite Y, zeolite L, zeolite Ω, USY zeolite, ZK, ZSM, silicalite, chabazite, erionite, offretite, mordenite, nitrolite, faujasite, sodalite, thomsonite, but not limited to these.
Characteristics of zeolite include, because it is porous material, a larger surface area and an acid point. When a substance having a smaller surface area such as silica stone is used as a silicon-containing substance, a pulverization process for increasing the surface area is required, while zeolite has a larger surface area and thus requiring no pulverization process, and thereby the production process can be reduced on its industrialization. Additionally, when zeolite is mixed with a carbon-containing substance,
silica and carbon can be brought into a highly dispersed state by an interaction between the carbon-containing substance and the acid point of the zeolite, and thus, silicon tetrachloride can be obtained in a high yield even in a lower temperature condition.
Zeolite desirably has the following characteristics, but not limited to these. Zeolite suitably has a surface area (BET) of 1-1000 m$^2$/g, preferably 10-700 m$^2$/g, more preferably 300-600 m$^2$/g, but not limited to these. Zeolite suitably has a mean pore diameter of 2-100A, preferably 10-70A, more preferably 30-50A, but not limited to these. Zeolite suitably has a pore volume of 0.1-2.0 mL/g, preferably 0.3-1.5 mL/g, more preferably 0.5-1.0 mL/g, but not limited to these. Zeolite suitably has an acid point of 0.01-1.0 mol/kg, preferably 0.1-0.8 mol/kg, more preferably 0.3-0.6 mol/kg, but not limited to these. Zeolite suitably has a silica-alumina molar ratio of 2 or higher, preferably 2-1000, more preferably 10-1000, but not limited to these.
A silicon-containing substance used in the present embodiment may contain at least zeolite, or otherwise contain a silicon-containing compound in addition to zeolite. Specific examples of silicon-containing compound include silica stone, quartz sand, silicon-accumulated biomass and amorphous silica alumina, but not limited to these. The suitable amount of silicon contained in a silicon-containing compound is 15%-46% by mass, preferably 20%-45% by mass, more preferably, 20%-35% by mass, but not limited to these.

Furthermore, a silicon-containing substance used in the present embodiment may include an accessory component other than an primary component including the above-described zeolite or a silicon-containing compound. Specific examples of the accessory component include a noble metal such as gold, silver, platinum, palladium or molybdenum which is supported on zeolite, and a binder such as clay mineral, silica sol or alumina sol which is used to form zeolite, but not limited to these.

Additionally, spent zeolite is preferably used in the reaction. "Spent zeolite" refers to a zeolite wasted after industrially used, specific examples of spent zeolite include a zeolite wasted after used as a reaction catalyst, an adsorbent or an ion exchange membrane, but not limited to these. Spent zeolite may contain a substance in addition to zeolite.

Zeolite is used for various applications such as reaction catalyst, adsorbent or ion exchange membrane in many industrial fields, and thus spent zeolite can be provided stably in a large amount. Furthermore, most of the spent zeolite is treated as an industrial waste without being collected and recycled. When a silicon-containing substance, which contains at least spent zeolite, is used as a raw material, not only raw material costs but also processing costs of spent zeolite, which were conventionally required, can be reduced. Besides, industrial wastes can also be reduced, and therefore the load to the environment can be reduced.

In particular, a spent catalyst, preferably a spent catalyst, which was used for a crude oil processing, is suitably used as spent zeolite, but not limited this. Some of spent catalysts used for a crude oil processing include a catalyst to which a carbon-containing substance of the crude oil is attached, whereby silica and a carbon-containing substance described later can be brought into a higher dispersion state. Thereby, a higher conversion rate of chlorination reaction can be achieved even under a lower temperature condition. An amount of the carbon-containing substance to be added can also be reduced, which results in a further cost reduction. Additionally, some of spent catalysts used for a crude oil processing include a catalyst to which a sulfur component of the crude oil is attached, whereby a conversion rate of the chlorination reaction is further increased by a catalytic action of the sulfur component.

Carbon-containing substances used in the present embodiment, may be not only a solid such as coke, activated carbon or carbon black, but also a gas such as carbon monoxide, carbon dioxide or methane, and further, as described later, carbon monoxide, which is produced in Step (1), may be recycled, but not limited to these. An amount of the carbon-containing substance to be added is suitably selected such that the molar number of carbon would be 2-25 times, preferably 2-12 times, more preferably, 3-6 times lager than the total molar number of silicon and aluminum included in a silicon-containing substance, but not limited to these.

A silicon-containing substance and a carbon-containing substance may simply be mixed together or otherwise mixed through carbonization. Carbonization refers to a process where a silicon-containing substance and a carbon-containing substance are mixed, and the obtained mixture is then heated in an inert gas atmosphere to carbonize the silicon-containing substance, through carbonization of zeolite, silica and carbon can be brought into a higher dispersion state than in the case where zeolite and carbon-containing substance are simply mixed together. An inert gas for use in carbonization is nitrogen, argon or helium, but not limited to these. A heating temperature at carbonization is suitably 200°C-1200°C, preferably 400°C-1000°C, more preferably 600°C-800°C, but not limited to these.

In one embodiment of the invention, a carbon-containing substance contains an ash produced in an industrial process. An ash produced in an industrial process refers to an ash containing carbon produced by combustion or incineration in plant. A specific example of the ash is an ash produced in a waste combustion plant or in a power plant, but not limited to this. An ash produced in an industrial process generally has a smaller particle diameter and a larger surface area, and thus silica and carbon can be in a higher dispersion state.

The amount of carbon contained in an ash produced in an industrial process is suitably 30%-95% by mass, preferably 60%-95% by mass, more preferably 70%-90% by mass based on the total mass of the ash, but not limited to these. A mean particle diameter of carbon contained in an ash produced in an industrial process is suitably 0.1-1000 $\mu$m, preferably 1-100 $\mu$m, more preferably 5-30 $\mu$m, but not limited to these. A surface area (BET) of an ash produced in an industrial process is suitably 0.01-100 $m^2/g$, preferably 0.1-50 $m^2/g$, more preferably 1-30 $m^2/g$, but not limited to these.

When a substance having a larger particle diameter such as coke or activated carbon is used as a carbon-containing substance, a pulverization process is required to reduce the particle diameter, while an ash produced in an industrial process dose not require a pulverization process, and therefore the production process can be simplified. An ash produced in an industrial process can be provided stably in a large amount. Furthermore, most of the ash produced in an industrial process is treated as an industrial waste without being collected and recycled. Therefore, when an ash produced in an industrial process is used as a carbon-containing substance, not only raw material costs but also processing costs of spent zeolite, which were conventionally required, can be reduced. Besides, industrial wastes can also be reduced, and therefore the load to the environment can be reduced.

In one embodiment of the invention, an ash produced in an industrial process, especially, an ash produced in a power-generation facility where a combustion energy is converted into an electric power by burning an organic substance (hereinafter, referred to as an ash produced in a power-generation facility) is preferably contained as an above-described carbon-containing substance. An ash produced in a power-generation facility refers to an ash produced primarily in a thermal power plant or in an integrated gasification combined cycle (hereinafter, abbreviated as IGCC), but not limited to this. IGCC is an electric power production system where electricity is generated in a hybrid power generation facility, by using, as a raw material, a synthetic gas including carbon monoxide or hydrogen as a primary component, which is produced from a fossil fuel such as heavy oil, petroleum residue oil, petroleum coke, olimulsion, or coal, and from where a large amount of ashes are discarded.

Characteristics of an ash produced in a power-generation facility include, of course, a smaller particle diameter and a larger surface area, and besides, a sulfur content arising from a use of fossil fuel as a raw material. As described above, sulfur acts as a catalyst in a chlorination reaction, and thus, when an ash produced in a power-generation facility is used as a carbon-containing substance, a conversion rate of the chlorination reaction is increased. An ash produced in a power-generation facility suitably contains 1%-30% by mass, preferably 2%-20% by mass, and more preferably, 5%-10% by mass of sulfur, but not limited to these.

In a conventional technique, a raw material and a sulfur compound was mixed by mixing a sulfur compound with a silicon-containing substance and a carbon-containing substance directly or otherwise by feeding a sulfur content directly into a reaction system. Thus it is difficult to highly disperse silica and carbon with a sulfur compound, and this can hardly be defined that sulfur exhibits a sufficient catalytic ability. On the other hand, an ash produced in a power-generation facility includes carbon and sulfur in a high dispersion state at a molecular level, and therefore, the conversion rate of the reaction can be increased even with a low content of sulfur.

A catalyst promoting a chlorination reaction may be added on producing silicon tetrachloride. A catalyst promoting a chlorination reaction includes a potassium content or a sulfur content, but not limited to these. Specifically, as a potassium content, potassium carbonate, potassium chloride, potassium hydroxide, potassium sulfate or potassium nitrate can be used, and as a sulfur content, sulfur, sulfur dioxide, hydrogen sulfide or carbon disulfide can be used, but not limited to these. An amount of the catalyst to be added may suitably be 0.05%-30% by mass, preferably 0.05%-20% by mass, more preferably 0.1%-10% by mass based on the silicon content in the reaction mixture, but not limited to these. A method for mixing a silicon-containing substance that contains at least zeolite with a carbon-containing substance, and, as required, with a solid or liquid catalyst may be performed either by wet process or dry process, and various other techniques can also be used. Additionally, these substances may be provided directly in a reactor without mixing with a catalyst.

(Chlorine-containing substance)

As a chlorine-containing substances used in the present embodiment, chlorine or a chlorinated carbon compound such as carbon tetrachloride, tetrachloroethylene or phosgene, and a mixture of chlorine with carbon monoxide, carbon dioxide, methane, hydrogen chloride, chlorohydrocarbon or an inert gas can be used, but not limited to these. As described later, a chlorine-containing substance, which was not reacted in Step (1), may be recycled, and additionally, chlorine produced by electrolysis of zinc chloride in Step (4) may also be recycled.

In a production method of the present embodiment, a reaction of a chlorine-containing substance with a silicon-containing substance, a carbon-containing substance, or a mixture to which a catalyst is added as required may be conducted by using either an immobilized bed or a fluidized bed, and the reaction temperature is suitably 400°C-1500°C, preferably 600°C-1200°C, more preferably 700°C-900°C, but not limited to these.

[Step (2)]

In Step (2), a silicon-containing substance that contains zeolite is subjected to a chlorination reaction in the presence of a carbon-containing substance to give a reaction product, from which silicon tetrachloride is separated and collected (S50).

Generally, most of zeolite contains alumina, and thus, silicon tetrachloride, aluminum chloride, carbon monoxide, and chlorine are primarily included in the reaction product. As a technique for separating and refining silicon tetrachloride, a generally well-known distillation method can be used.

Specifically, a reaction product is condensed using a condenser to separate carbon monoxide and chlorine in a reaction product gas (S60). The condensed reaction product solution contains primarily silicon tetrachloride and aluminum chloride. Under atmospheric pressure, boiling point of aluminum chloride is approximately 183°C, and that of silicon tetrachloride is approximately 58°C, and thus, when the condensate is heated in a distillation still through a distillation column, silicon tetrachloride can be obtained from the distillation column top (S70), and aluminum chloride can be obtained from distillation column bottom. Additionally, purity of the obtained silicon tetrachloride can be raised by repeating the distillation.

To obtain a high solar cell performance, high purity silicon should be used, and besides, since the purity of a silicon tetrachloride as an intermediate compound is largely influenced by purity of silicon produced as a raw material, purity of silicon tetrachloride is preferably raised higher than the required level by increasing the number of distillation process. In one embodiment of the invention, the purity of silicon tetrachloride refined by Step (2) is preferably raised to 99.99% or higher by repeating the above steps.

In one embodiment of the invention, a reaction product gas, which was separated and collected by Step (2), may be used directly as a raw material in Step (1) without further separation and refinement. Since carbon monoxide in a reaction product gas can be recycled as a carbon-containing substance of Step (1), and a unreacted chlorine-containing substance can be recycled as a chlorine source required for the chlorination reaction, further reduction in the production cost can be expected. A recycling step of this reaction product gas has a significant superiority in that any separation and refinement of the reactant gas is not required.

[Step (3)]

In Step (3), as shown in formula (g) stated above, silicon tetrachloride refined in Step (2) and a zinc gas are reacted in vapor phase to reduce silicon tetrachloride (S80), and thereby producing high purity polycrystalline silicon. When a method for producing silicon for solar cell is performed, a reaction temperature of the above reductive reaction is preferably 600°C-1400°C, but not limited to this range. As described later, zinc to be used in the present embodiment may be prepared by reacting a zinc gas not reacted in Step (3) or by recycling zinc separated and collected in the later described Step (4).

A formed polycrystalline silicon can be refined to a level (99.99% or higher, preferably 99.99999% or higher) available for producing a solar cell by repeating a evaporation separation method. Other reaction products include zinc chloride, unreacted zinc and silicon tetrachloride, and by decreasing a reaction temperature to approximately 732°C, which is the boiling point of zinc chloride, or lower, zinc chloride is collected as a liquid and zinc is collected as a powder or a liquid. Unreacted zinc and silicon tetrachloride can be recycled as a raw material of Step (3).

[Step (4)]

One embodiment of the invention comprises a Step (4) of separating and collecting zinc chloride (S90) formed by the process (3) to zinc (S110) and chlorine (S120) by electrolysis (S100). Zinc separated and collected in Step (4) may be recycled as a raw material in Step (3), and chlorine separated and collected in Step (4) may be recycled as a raw material in Step (1). The production cost can be further reduced by recycling a reaction by-product thoroughly as a reaction raw material. Although, in the conventional production processes, a process of converting chlorine into hydrogen chloride is required for recycling chlorine obtained by Step (4), while, in the present embodiment, chlorine obtained by Step (4) can be recycled directly. Therefore, the production process can be further simplified and also the production cost can be further reduced than those in the prior art.

The effects of the method for producing silicon for solar cell according to the invention will be specifically described below with reference to the examples. In the following descriptions, comparative examples and examination examples of a process for producing silicon tetrachloride in Step (1) are shown.

(Example 2-1)

100 mg of USY zeolite (manufactured by Catalysts and Chemicals Industries Co., Ltd., silica-alumina molar ratio: 150) is used as a silicon-containing substance, and 39 mg of coke (manufactured by Nippon Oil Corp., carbon content: 99.9% by mass or higher) is used as a carbon-containing substance. The USY zeolite used has a surface area (BET) of 570 m$^2$/g, a mean pore diameter of 48A, a pore volume of 1.1 mL/g, and an acid point of 0.5 mol/kg, in which a commercial coke was used after pulverized by a ball mill. The carbon-containing substance was added into the silicon-containing substance and then mixed to obtain a reaction mixture. An amount of the carbon-containing substance to be added was set such that a molar number of C included in the reaction mixture would satisfy the following formula (h).

$$\text{Molar number of C included in a reaction mixture} = 2A+3B \quad (h)$$

A: Molar number of Si included in a silicon-containing substance
B: Molar number of Al included in a silicon-containing substance

A reaction mixture was brought into contact with a pure chlorine gas for 1 hour at a temperature of 800°C, 900°C or 1000°C so as to conduct a chlorination reaction. Thereafter, a reaction product is condensed using a condenser to separate into two reaction product gases of carbon monoxide and chlorine, and then, the condensate is heated in a distillation still through a distillation column, thereby obtaining silicon tetrachloride from the distillation column top. Conversion rate of the chlorination reaction to silicon tetrachloride was calculated by the following formula (i).
$$\text{Conversion rate of reaction (\%)}= X/Y \times 100 \quad (i)$$

X: Molar number of a produced silicon tetrachloride
Y: Molar number of Si included in a silicon-containing substance
As a result, a conversion rate of reaction to silicon tetrachloride was 56.2% at 800°C, 71.9% at 900°C and 71.0% at 1,000°C.

(Example 2-2)

100 mg of spent USY zeolite was used as a silicon-containing substance and 36 mg of coke was used as a carbon-containing substance. A spent USY used in the example was a spent catalyst used for a crude oil processing, to which 1.9% by mass of carbon content and 0.3% by mass of sulfur content of the crude oil were attached. Reaction mixture was produced using a same technique as in Example 2-1, and then brought into contact with a pure chlorine gas for 1 hour at a temperature of 700°C, 800°C or 900°C so as to conduct a chlorination reaction. As a result, a conversion rate of the reaction to silicon tetrachloride was 74.1% at 700°C, 81.1 % at 800°C and 80.5% at 900°C.

(Example 2-3)

100 mg of USY zeolite was used as a silicon-containing substance, and 46 mg of ash produced in an industrial process was used as a carbon-containing substance. In the example, as an ash produced in an industrial process, an ash produced in a waste combustion plant was used without pulverization. An ash produced in an industrial process used had a carbon content of 85.2% by mass, a mean particle diameter of 17 $\mu$m, and a surface area (BET) of 19 $m^2$/g. A reaction mixture was produced using a same technique as in Example 2-1, and then brought into contact with a pure chlorine gas for 1 hour at a temperature of 700°C, 800°C or 900°C so as to conduct a chlorination reaction. As a result, a conversion rate of the reaction to silicon tetrachloride was 65.6% at 700°C, 72.5% at 800°C and 72.8% at 900°C.

(Example 2-4)

100 mg of USY zeolite was used as a silicon-containing substance, and 49 mg of ash produced in a power-generation facility was used as a carbon-containing substance. In the example, as an ash produced in a power-generation facility, an ash produced in an IGCC was used without pulverization. An ash produced in an IGCC used had a carbon content of 79.0% by mass, a sulfur content of 5.9% by mass, a mean particle diameter of 8 $\mu$m, and a surface area (BET) of 23 $m^2$/g. A reaction mixture was produced using a same technique as in Example 2-1, and then brought into contact with a pure chlorine gas for 1 hour at a temperature of 700°C, 800°C or 900°C so as to conduct a chlorination reaction. As a result, a conversion rate of the reaction to silicon tetrachloride was 74.3% at 700°C, 82.0% at 800°C and 81.7% at 900°C.

(Comparative example 2-1)

100 mg of silica stone was used as a silicon-containing substance and 39 mg of coke was used as a carbon-containing substance. A silica stone was used after pulverized by a ball mill. A silica stone after pulverization had a surface diameter (BET) of 2,160 $cm^2$/g and a silica content of 95.2% by mass. A reaction mixture was produced using a same technique as in Example 2-1, and then brought into contact with a pure chlorine gas for 1 hour at a temperature of 700°C, 800°C or 900°C so as to conduct a chlorination reaction. As a result, a conversion rate of the reaction to silicon tetrachloride was 3.9% at 700°C, 4.2% at 800°C and 4.0% at 900°C.

The present invention is described based on the examples, but the invention is not limited to these examples, and various changes and modifications can be made thereto.

Industrial Applicability

The present invention is available in the field of producing silicon tetrachloride where various inorganic silicon compounds are used as a raw material and also in the field of producing silicon for solar cell.

**Claims**

1. A method for producing silicon tetrachloride, wherein a silicon-containing substance that contains zeolite is chlorinated in the presence of a carbon-containing substance.

2. A method for producing silicon tetrachloride according to claim 1, wherein the zeolite contains potassium.

3. A method for producing silicon tetrachloride according to any one of claim 1 and 2, wherein spent zeolite is used as the zeolite.

4. A method for producing silicon tetrachloride according to claim 3, wherein a spent catalyst is used as the spent zeolite.

5. A method for producing silicon tetrachloride according to any one of claims 1 to 4, wherein the carbon-containing substance contains an ash produced in an industrial process.

6. A method for producing silicon tetrachloride according to claim 5, wherein the ash produced in the industrial process is an ash produced in a power-generation facility where a combustion energy is converted into an electric power by burning an organic substance.

7. A method for producing silicon tetrachloride according to any one of claims 1 to 5, wherein the silicon-containing substance and the carbon-containing substance are mixed, and the silicon-containing substance is carbonized by heating, followed by chlorination.

8. A method for producing silicon for solar cell comprising: (1) chlorinating a silicon-containing substance that contains zeolite in the presence of a carbon-containing substance to produce silicon tetrachloride; (2) separating and refining the silicon tetrachloride produced in (1); and (3) reacting the silicon tetrachloride refined in (2) with a zinc gas to produce polycrystalline silicon.

9. A method for producing silicon for solar cell according to claim 8, wherein the zeolite is spent zeolite.

10. A method for producing silicon for solar cell according to any one of claim 8 and 9, wherein the carbon-containing substance contains an ash produced in an industrial process.

11. A method for producing silicon for solar cell according to claim 10, wherein the ash produced in the industrial process is an ash produced in a power-generation facility where a combustion energy is converted into an electric power by burning an organic substance.

12. A method for producing silicon for solar cell according to any one of claims 8 to 11, wherein purity of silicon tetrachloride obtained in (2) is 99.99% or higher.

13. A method for producing silicon for solar cell according to any one of claims 8 to 12, wherein a reaction product gas produced by (2) is recycled as a raw material in (1).

14. A method for producing silicon for solar cell according to any one of claims 8 to 13 further comprising (4) separating and collecting zinc chloride formed by (3) to zinc and chlorine by electrolysis, wherein zinc separated and collected in (4) is recycled as a raw material in (3), and chlorine separated and collected in (4) is recycled as a raw material in the step (1).

FIG.1

```
┌─────────────────┐
│ SIO₂ SUCH AS    │
│ SILICA STONE    │
└────────┬────────┘
         ↓
┌─────────────────┐        ┌─────────────────┐
│ REDUCTION STEP  │←───────│     CARBON      │
└────────┬────────┘        └─────────────────┘
         ↓
┌─────────────────┐                            ┌─────────────────┐
│ METAL SILICON   │                            │    CHLORINE     │
└────────┬────────┘                            └─────────────────┘
         ↓                   ┌──────────────┐   ┌─────────────────┐
┌─────────────────┐          │  HYDROGEN    │←──│    HYDROGEN     │
│ CHLORINATION    │←─────────│  CHLORIDE    │   └─────────────────┘
│ STEP            │          └──────────────┘
└────────┬────────┘          ┌──────────────────┐  ┌─────────────────┐
         ↓                    │ SEPARATION AND   │  │     ZINC        │
┌─────────────────┐           │ REFINEMENT STEP  │  └─────────────────┘
│ SiHCl₃ 、SiCl₄  │           └──────────────────┘
└────────┬────────┘          ┌──────────────┐     ┌─────────────────┐
         ↓                    │   HCl、H₂    │     │  ELECTROLYSIS   │
┌─────────────────┐           └──────────────┘     └─────────────────┘
│ DISTILLATION    │──────────→
│ STEP            │
└────────┬────────┘
         ↓
┌─────────────────┐          ┌──────────────────┐  ┌─────────────────┐
│ SILICON         │─────────→│ ZINC REDUCTION   │─→│  ZINC CHLORIDE  │
│ TETRACHLORIDE   │          │ REACTION         │  └─────────────────┘
└─────────────────┘          └────────┬─────────┘
                                      ⇓
                             ┌──────────────────┐
                             │ SILICON FOR      │
                             │ SOLAR CELL       │
                             └──────────────────┘
```

FIG.2

## INTERNATIONAL SEARCH REPORT

| | International application No. |
|---|---|
| | PCT/JP2010/005798 |

**A. CLASSIFICATION OF SUBJECT MATTER**
*C01B33/107(2006.01)i*

According to International Patent Classification (IPC) or to both national classification and IPC

**B. FIELDS SEARCHED**

Minimum documentation searched (classification system followed by classification symbols)
C01B33/107

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 1-249620 A (Denki Kagaku Kogyo Kabushiki Kaisha), 04 October 1989 (04.10.1989), entire text (Family: none) | 1-14 |
| A | JP 62-171912 A (Director General, Agency of Industrial Science and Technology), 28 July 1987 (28.07.1987), entire text (Family: none) | 1-14 |
| A | JP 58-156521 A (Siemens AG.), 17 September 1983 (17.09.1983), entire text & EP 87732 A1 & DE 3206766 A & DE 3206766 A1 | 1-14 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 26 November, 2010 (26.11.10) | 07 December, 2010 (07.12.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2010/005798

C (Continuation). DOCUMENTS CONSIDERED TO BE RELEVANT

| Category* | Citation of document, with indication, where appropriate, of the relevant passages | Relevant to claim No. |
|---|---|---|
| A | JP 57-209814 A (Siemens AG.), 23 December 1982 (23.12.1982), entire text & DE 3123009 A & FR 2507590 A & IT 1190862 A & IT 1190862 B & IT 8221759 A0 | 1-14 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S58055330 B
- JP H03055407 B
- JP H04072765 B
- JP H11092130 B